(19) **Europäisches Patentamt**
**European Patent Office**
**Office européen des brevets**

(11) **EP 4 603 448 A1**

(12) **EUROPEAN PATENT APPLICATION**

(43) Date of publication:
**20.08.2025 Bulletin 2025/34**

(51) International Patent Classification (IPC):
**C01B 32/168** (2017.01)    **C01B 32/174** (2017.01)

(21) Application number: **24158317.8**

(22) Date of filing: **19.02.2024**

(52) Cooperative Patent Classification (CPC):
**C01B 32/168; C01B 32/159; C01B 32/174;**
C01B 2202/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Universität Heidelberg**
**69117 Heidelberg (DE)**

(72) Inventors:
• **Settele, Simon Johannes**
**69115 Heidelberg (DE)**
• **Zaumseil, Jana**
**69121 Heidelberg (DE)**
• **Stammer, Florian**
**69126 Heidelberg (DE)**

(74) Representative: **Müller-Boré & Partner**
**Patentanwälte PartG mbB**
**Friedenheimer Brücke 21**
**80639 München (DE)**

(54) **METHOD FOR PREPARING SINGLE WALLED CARBON NANOTUBES HAVING LUMINESCENT OXYGEN DEFECTS**

(57)    The present invention relates to a method for preparing single walled carbon nanotubes having luminescent oxygen defects, a composition comprising a plurality of the single walled carbon nanotubes and a hybrid structure comprising the single walled carbon nanotubes and a nucleic acid molecule or a pegylated phospholipid adhered to the surface of the single-walled carbon nanotube. The hybrid structure can be used in sensing applications and biological imaging, particularly *in-vivo* imaging.

**ROS production through Fenton-like reaction cycle**

Fig. 1

## Description

The present invention relates to a method for preparing single walled carbon nanotubes having luminescent oxygen defects, a composition comprising a plurality of the single walled carbon nanotubes and a hybrid structure comprising the single walled carbon nanotubes and a nucleic acid molecule or a pegylated phospholipid adhered to the surface of the single-walled carbon nanotube. The hybrid structure can be used in sensing applications and biological imaging, particularly *in-vivo* imaging.

Single-walled carbon nanotubes (SWNTs) are a unique nanomaterial with the ability to absorb and emit light in the near-infrared (NIR) with a range of applications in medical imaging. At emission wavelengths of 1000-1300 nm (second biological window, NIR II) the transparency of biological tissue is high and light scattering and autofluorescence are greatly reduced. SWNTs have thus been used for *in-vivo* deep-tissue imaging. However, the photoluminescence quantum yield (PLQY) of unfunctionalized SWNTs is rather low (about 0.5 %).

The introduction of luminescent defects by intentional and controlled covalent functionalization of SWNT has become a powerful tool to increase their brightness. Over the past decade, a variety of different synthetic approaches have been developed to introduce such luminescent defects, however, there is no functionalization method that meets the requirements for widespread application. Most commonly, diazonium salts are used for covalent functionalization, yet reported sample qualities vary widely and up-scaling requires either the use of high concentrations of explosive diazonium salts or toxic solvents such as chlorosulfonic acid. Other methods, such as that described in US 2020/0180962 A1, require functionalization by addition of bleach and strong UV-B irradiation. These conditions only allow for up-scaling to be achieved in a flow-reactor scheme at low SWNT concentrations.

It is therefore an object of the claimed invention to provide SWNTs having luminescent oxygen defects having a high brightness with a photoluminescence quantum yield of at least 2% in the second biological window. It is a further object of the claimed invention to provide a method for preparing the SWNTs having luminescent oxygen defects by mild reaction conditions and with high reproducibility and simple scale-up.

In particular, the present invention provides a method for preparing single walled carbon nanotubes having luminescent oxygen defects, the method comprising the steps of:

> a) providing a reaction mixture comprising single-walled carbon nanotubes, n-valent metal cations $M^{n+}$ and a reducing agent in a solvent, wherein
>
>> n is 2 or 3,
>> the reducing agent is capable of reducing the n-valent metal cation to a (n-1)-valent metal cation $M^{(n-1)+}$,
>> the (n-1)-valent metal cation $M^{(n-1)+}$ is capable of performing one-electron reduction of molecular oxygen $O_2$,
>> the solvent comprises molecular oxygen $O_2$ dissolved in the solvent, and the molar amount of the reducing agent contained in the reaction mixture is at least three times the molar amount of the n-valent metal cation $M^{n+}$. and
>
> b) allowing the reaction mixture to react.

According to the present invention, a luminescent oxygen defect represents a defect, where oxygen is incorporated into the SWNT lattice. Specifically, two neighboring $sp^2$-hybridised carbon atoms of the lattice are transformed to $sp^3$-hybridised carbon atoms, wherein the two neighboring carbon atoms then form a bond to an oxygen atom. The oxygen defects are commonly present in two different configurations named ether-d and epoxide-I defects, wherein d-bonds are perpendicular, and I-bonds are parallel to the SWNT axis.

Without wishing to be bound by theory, it is contemplated that the oxygen defect sites on the SWNT surface form local potential energy wells, where excitons generated within the SWNTs get trapped and undergo a luminescent decay.

As stated earlier, the method according to the present invention comprises a step a) of providing a reaction mixture comprising single-walled carbon nanotubes, n-valent metal cations $M^{n+}$ and a reducing agent in a solvent.

The type of single-walled carbon nanotubes is not particularly limited, and they may be a single type of nanotubes or a mixture of different kinds of nanotubes. The nanotubes are preferably semiconducting. However, mixtures of different kinds of nanotubes may comprise metallic nanotubes in addition to semiconducting nanotubes. As an example, raw material obtained from the CoMoCAT® process may be used as the single-walled carbon nanotubes. In a preferred embodiment, the carbon nanotubes are one or more type selected from (6,5) nanotubes, (7,5) nanotubes, (8,3) nanotubes, (6,4) nanotubes, and mixtures thereof. In a specific embodiment, the nanotubes are (6,5) nanotubes.

The amount of SWNTs added to the reaction mixture is not particularly limited. The lower limit of the amount of SWNTs added to the reaction mixture is preferably 0.1 mg $L^{-1}$ in view of enabling sufficient recovery of the reaction product from the reaction mixture. The lower limit of the amount of SWNTs added to the reaction mixture is more preferably 0.4 mg $L^{-1}$, even more preferably 0.5 mg $L^{-1}$.

The upper limit of the amount of SWNTs added to the reaction mixture is limited by the dispersibility of the SWNTs in the reaction mixture. The upper limit is preferably 1000 mg $L^{-1}$, more preferably 500 mg $L^{-1}$ and even

more preferably 100 mg L$^{-1}$.

The n-valent metal cations $M^{n+}$ provided in the reaction mixture are 2- or 3-valent metal cations, i.e. n is 2 or 3. In a preferred embodiment, n is 2. The reaction mixture may comprise only one kind of metal cation $M^{n+}$ or it may comprise a mixture of metal cations. However, the metal cation is preferably not $Fe^{3+}$.

According to the present invention, the metal cations $M^{n+}$ are reduced by the reducing agent to form (n-1)-valent metal cations $M^{(n-1)+}$. The metal cation $M^{(n-1)+}$ is capable of performing one-electron reduction of molecular oxygen $O_2$. Without wishing to be bound by theory, it is contemplated that the one-electron reduction of molecular oxygen results in a superoxide radical anion $O_2^{-\bullet}$. Suitable metal cations that satisfy the required potential for one-electron reduction of molecular oxygen $O_2$ are known to a person skilled in the art. In certain embodiments, the metal cation $M^{n+}$ may be selected from the group consisting of $Cu^{2+}$, $Co^{2+}$, $Cr^{3+}$ and $Ti^{3+}$. The metal cation $M^{n+}$ is preferably selected from the group consisting of $Cu^{2+}$ and $Co^{2+}$. In a specific embodiment, the metal cation $M^{n+}$ is $Cu^{2+}$.

The concentration of the metal cations $M^{n+}$ in the reaction mixture is not particularly limited. Preferably, the concentration of the metal cations $M^{n+}$ in the reaction mixture is from 1 to 500 $\mu$mol per mg of the SWNTs in the reaction solution, preferably from 10 to 300 $\mu$mol per mg of the SWNTs and even more preferably from 15 to 150 $\mu$mol per mg of the SWNTs.

The reducing agent provided in the reaction mixture is not particularly limited, as long as it is capable of reducing the n-valent metal cation to a (n-1)-valent metal cation $M^{(n-1)+}$. That is, depending on the metal cation used, different reducing agents may be suitable. The reaction mixture may comprise only one kind of reducing agent or it may comprise a mixture of different reducing agents. Preferably, the reaction mixture comprises only one kind of reducing agent. In certain embodiments, the reducing agent is selected from the group consisting of hydrazine derivatives, hydroxylamine, formaldehyde, sodium bisulfite, sodium-L-ascorbate and sodium dithionite ($Na_2S_2O_4$). The reducing agent is preferably selected from the group consisting of sodium-L-ascorbate and sodium dithionite ($Na_2S_2O_4$). In a specific embodiment, the reducing agent is sodium-L-ascorbate.

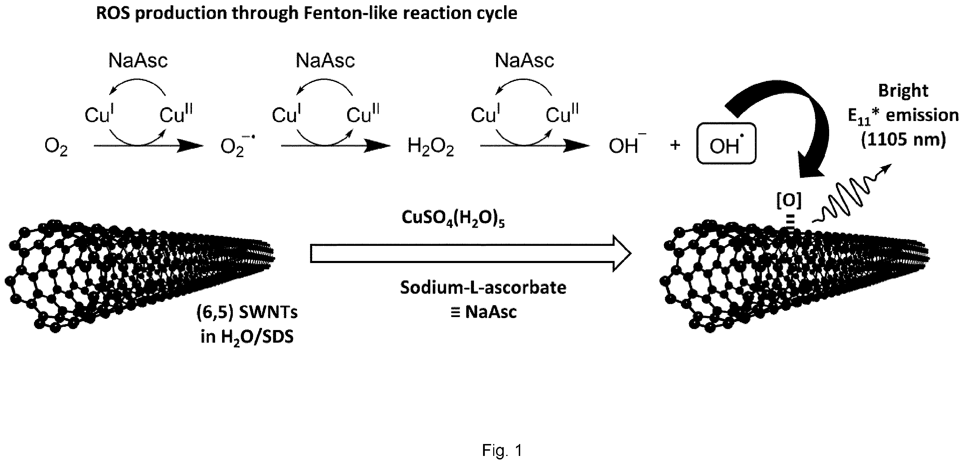

For the reaction underlying the claimed method to proceed, the molar amount of the reducing agent contained in the reaction mixture is at least three times the molar amount of the n-valent metal cation $M^{n+}$. Thus, the concentration of the reducing agent in the reaction mixture is preferably at least 3 $\mu$mol per mg of the SWNTs, more preferably at least 30 $\mu$mol per mg of the SWNTs and even more preferably at least 45 $\mu$mol per mg of the SWNTs. The reason for this will be explained with reference to Figure 1 further below.

The ratio of the molar amount of the reducing agent compared to the molar amount of the metal cation $M^{n+}$ is preferably at least 5, more preferably at least 10.

The upper limit of the molar amount of the reducing agent compared to the molar amount of the metal cation $M^{n+}$ is not particularly limited. However, in view of a reduction of resources needed, the ratio of the molar amount of the reducing agent compared to the molar amount of the metal cation $M^{n+}$ is preferably equal to or less than 50, more preferably equal to or less than 25. Similarly, the upper limit of the concentration of the reducing agent in the reaction mixture is preferably 25 mmol per mg of the SWNTs, more preferably 12.5 mmol per mg of the SWNTs.

The reaction mixture further comprises a solvent. The solvent used is not particularly limited, as long as it comprises molecular oxygen dissolved therein. Without wishing to be bound by theory, it is contemplated that the molecular oxygen takes part in the chemical reaction underlying the claimed method. This hypothesis will be further explained with reference to Figure 1 further below. Suitable solvents for the claimed method are any kind of solvents that suitably solve or disperse the SWNTs, n-valent metal cations $M^{n+}$ and the reducing agent to enable a reaction. The solvent may be an organic solvent or an aqueous solvent. In a specific embodiment, the solvent is water.

The reaction mixture may further comprise additional components as necessary. For example, the reaction mixture may comprise a stabilizer or a surfactant. Suitable surfactants include, for example, sodium dodecyl sulfate, sodium dodecylbenzenesulfonate, sodium cholate or sodium deoxycholate. In case sodium deoxycholate is used as a surfactant, the concentration is preferably below 0.05% (w/v) since at higher concentrations it can act as inhibitor as explained further below.

In step b) of the method according to the present invention, the reaction mixture is allowed to react. No specific external input is needed to start the reaction. That is, the reaction can be carried out at ambient conditions, such as standard temperature and pressure defined by IUPAC. The reaction time is not particularly limited. In general, up to the complete consumption of one reactant essential for the reaction, a longer reaction time corresponds to a higher degree of functionalization of the SWNTs. That is, a longer reaction time results in a higher number of oxygen defects being introduced to the SWNTs. The reaction time is preferably at least 1 minute, more preferably at least 5 minutes, even more preferably at least 30 minutes, even more preferably at least 60 minutes, even more preferably at least 2 hours and even more preferably at least 4 hours. As outlined above, the upper limit of the reaction time is defined by the time until one essential reactant of the reaction is completely consumed. However, when the reaction is manually terminated, the upper limit of the reaction time is preferably 24 hours, more preferably 20 hours.

Notably, the reaction can be carried out without any purposeful illumination. That is, for the reaction to start and proceed, no activation by illumination with, for example, UV-radiation is necessary. This does not mean, however, that the reaction can only be carried out in the dark. Rather, the functionalization reaction does not rely on illumination.

The method according to the present invention may further comprise a step c) of terminating the reaction. As outlined above, the reaction may terminate by itself if one of the essential reactants is completely consumed. However, it is also possible to actively terminate the reaction by adding a complexing agent being capable of complexing the metal cation $M^{n+}$ and/or $M^{(n-1)+}$ and/or by adding a surface agent being capable of blocking the surface of the single-walled carbon from further reaction.

A complexing agent forms a complex with the metal cation $M^{n+}$ and/or $M^{(n-1)+}$ and, thus, prevents the metal cation from further taking part in the reaction. Complexing agents being capable of complexing specific metal cations $M^{n+}$ and/or $M^{(n-1)+}$ are known to a person skilled in the art. One example for a complexing agent is ethylenediaminetetraacetic acid (EDTA).

Surface agents adhere to the surface of the SWNTs and thereby make the carbon lattice of the SWNTs unavailable for further reaction. Suitable surface agents are known to a person skilled in the art and include, for example, sodium deoxycholate.

The surface agent is preferably added to the solution in a concentration of 0.1 % (w/v) or more to act as an inhibitor. The degree of inhibition typically increases with increasing concentration of the surface agent. The surface agent is therefore more preferably added in a concentration of 0.2 % (w/v). The upper limit of the concentration of the surface agent is not particularly limited, but may be set as 2 % (w/v)

Figure 1 displays a potential pathway for the creation of luminescent oxygen defects in SWNTs, which relies on the reaction between in-situ generated reactive oxygen species and the nanotube sidewall. In Figure 1, the metal cation $M^{n+}$ is $Cu^{2+}$, the reducing agent is sodium-L-ascorbate and the solvent is water. Without wishing to be bound by theory, it is contemplated that the generation of reactive oxygen species is initiated by the reduction of solvated Cu(II) by an excess of sodium-L-ascorbate (NaAsc). The reduction of Cu(II) to Cu(I) ions in the presence of dissolved oxygen triggers several oxidation-reduction cycles leading to the formation of $H_2O_2$ via intermediate superoxide anion radicals, which subsequently reacts with Cu(I) to generate hydroxyl (OH) radicals. These highly reactive hydroxyl radicals attack the SWNT sidewalls resulting in the creation of oxygen defects.

The present invention further provides a composition comprising a plurality of single walled carbon nanotubes having luminescent oxygen defects, wherein the single walled carbon nanotubes having the luminescent oxygen defects have a photoluminescence quantum yield of at least 2%.

The single walled carbon nanotubes having the luminescent oxygen defects and having a photoluminescence quantum yield of at least 2% are obtainable by the method described above. Thus, the present invention further provides a composition comprising a plurality of single walled carbon nanotubes obtainable by a method comprising the steps of:

a) providing a reaction mixture comprising single-walled carbon nanotubes, n-valent metal cations $M^{n+}$ and a reducing agent in a solvent, wherein

n is 2 or 3,
the reducing agent is capable of reducing the n-valent metal cation to a (n-1)-valent metal cation $M^{(n-1)+}$,
the (n-1)-valent metal cation $M^{(n-1)+}$ is capable of performing one-electron reduction of molecular oxygen $O_2$,
the solvent comprises molecular oxygen $O_2$ dissolved in the solvent, and the molar amount of the reducing agent contained in the reaction mixture is at least three times the molar amount of the n-valent metal cation $M^{n+}$. and

b) allowing the reaction mixture to react.

As outlined above, unfunctionalized SWNTs exhibit narrow exitonic emission features ($E_{11}$) in the near-infrared region but suffer from a low photoluminescence quantum yield (PLQY) of about 0.5 %. By introducing the oxygen defects into the SWNT lattice in accordance with the method of the present invention, local potential energy wells are formed, where mobile $E_{11}$ excitons are trapped, resulting in radiative decay at the defect with lower energies and hence emission bands that are red-shifted from the native excitonic $E_{11}$ emission. The localization of excitons at luminescent defects prevents quenching of the fast-diffusing excitons at non-radiative defects, leading to overall higher PLQY. In general, the PLQY is defined as the number of photons emitted over the whole spectral range (300 to 2600 nm) as a fraction of the number of photons absorbed by a molecule. The method for measuring the PLQY is described in detail in the experimental section of this description.

This comparably high PLQY of at least 2 % makes the SWNTs of the present invention suitable as fluorescence marker.

As outlined above, the oxygen defects introduced to the SWNTs have mainly two configurations, namely ether-d and epoxide-I defects, wherein d-bonds are perpendicular, and I-bonds are parallel to the SWNT axis. Both kinds of defects have lower energy than the surrounding lattice, thus trapping $E_{11}$ excitons. The radiative decays from these trap states are named $E_{11}^*$ emission and $E_{11}^{*-}$ emission, respectively.

Accordingly, in a preferred embodiment, the single walled carbon nanotubes having the luminescent oxygen defects show $E_{11}$ emission, $E_{11}^*$ emission and optionally $E_{11}^{*-}$ emission.

It should be noted that the exact emission wavelengths for the $E_{11}$, $E_{11}^*$ and $E_{11}^{*-}$emission somewhat varies depending on the type of SWNT. However, for (6,5) SWNTs, the $E_{11}$ emission is positioned at about 975 nm, the $E_{11}^*$ emission is positioned at about 1100 nm and the $E_{11}^{*-}$ emission is positioned at about 1275 nm. Furthermore, it should be noted that the $E_{11}^{*-}$ oxygen defects, i.e. the epoxide-I defects, may rearrange under illumination to ether-d defects showing $E_{11}^*$ emission. This rearrangement can be promoted by irradiating with UV-light at about 365 nm, or by letting a sample of the SWNTs having oxygen defects stand in daylight.

One possibility of assessing the degree of functionalization of the single walled carbon nanotubes having the luminescent oxygen defects is by performing Raman measurements. Here, the introduction of oxygen defects is manifested by an increase of the Raman D-mode. The degree of functionalization can thus be expressed as the area ratio of the Raman D-mode to the Raman $G^+$-mode, which is characteristic for SWNTs. In a preferred embodiment, the degree of functionalization ($D/G^+$) of the single walled carbon nanotubes having the luminescent oxygen defects is at least 0.05, further preferably at least 0.10 and even more preferably at least 0.20.

A further possibility of assessing the degree of functionalization of the single walled carbon nanotubes having the luminescent oxygen defects is by comparing the absorbance of the initial $E_{11}$ absorption to that of the $E_{11}^*$ absorption characteristic for the introduced oxygen defects. Here, the peak area ratio of the $E_{11}^*$ absorption to the $E_{11}$ absorption ($E_{11}^*/E_{11}$) is preferably at least 0.05, further preferably at least 0.10 and even more preferably at least 0.20.

As outlined above, due to their photostability and narrow exitonic emission features in the near-infrared region, in which the transparency of most biological tissue is high and light scattering as well as autofluorescence are greatly reduced, SWNTs are interesting candidates as fluorescence markers for biological and, in particular, *in-vivo* fluorescence imaging with high spatial resolution and deep tissue penetration. An important drawback of unfunctionalized SWNTs, i.e. their low PLQY, has already been overcome by the present invention as explained above.

A further important aspect is an improvement of the biocompatibility of the SWNTs having luminescent oxygen defects. This increase may be achieved by providing the surface of the SWNTs with biocompatible molecules, such as nucleic acid molecules or pegylated phospholipids.

Thus, the present invention further provides a hybrid structure comprising a single-walled carbon nanotube having luminescent oxygen defects and a nucleic acid molecule adhered to the surface of the single-walled carbon nanotube.

The present invention further provides a hybrid structure comprising a single-walled carbon nanotube having luminescent oxygen defects and a pegylated phospholipid adhered to the surface of the single-walled carbon nanotube.

The hybrid structures of the present invention may be used in biological imaging, preferably in *in-vivo* imaging or in sensing applications.

**Brief description of the figures**

Figure 1　　Theoretical reaction mechanism for the introduction of luminescent oxygen defects in SWNTs.

Figure 2　　Evolution of photoluminescence intensities for the $E_{11}$ and $E_{11}^*$ transitions during the functionalization reaction (a) and integrated photoluminescence intensities for the $E_{11}$ and $E_{11}^*$ transition as a function of reaction time.

Figure 3　　Comparison of photoluminescence quantum yield (PLQY) of unfunctionalized SWNTs and functionalized SWNTs obtained in Example 1 and Comparative Example 1.

In summary, the claimed invention provides the covalent functionalization of SWNTs by controlled metal-catalyzed oxidation of the SWNT carbon-lattice. The obtained functionalized SWNTs exhibit high brightness with a photoluminescence quantum yield of at least 2% in the second biological window (NIR-II, 1000-1700nm). The claimed invention represents the first reported method that uses metal catalysts to introduce luminescent oxygen defects in SWNTs. All chemicals are commercially available in high purity, they are non-corrosive and non-toxic. The mild reaction conditions enable high reproducibility and simple scale-up in a batch-reactor. No (UV-)light irradiation is necessary and functionalization can be performed with SWNT raw material (e.g. CoMoCAT© from Chasm) as obtained by commercial suppliers at high concentrations.

In detail, 2- or 3- valent metal ions are used in the presence of a reducing agent and dissolved oxygen, initiating several oxidation-reduction cycles and resulting in the formation of reactive oxygen species (ROS). These ROS perform covalent functionalization on the SWNT carbon lattice leading to the formation of oxygen-defects. Obtained defect sites act as quantum emitters in the 1D SWNT and enable highly efficient fluorescence in a wavelength range between 1040 and 1400 nm for (6,5) SWNTs.

The claimed invention will be further explained by the following non-limiting examples.

**Examples**

**Characterization methods**

UV-VIS-NIR absorption spectroscopy

Baseline-corrected absorption spectra were acquired with a Cary 6000i UV-VIS-NIR spectrophotometer (Varian, Inc.). The peak area ratio of the $E_{11}^*$ absorption to the $E_{11}$ absorption ($E_{11}^*$/ $E_{11}$) was determined by normalizing obtained spectra to the $E_{11}$ absorption and fitting and integrating the respective $E_{11}$ and $E_{11}^*$ absorption peaks.

Photoluminescence spectroscopy

Photoluminescence (PL) spectra were obtained with a Fluorolog-3 spectrometer (Horiba Jobin-Yvon) equipped with a 450 W xenon arc-discharge lamp and a liquid nitrogen cooled InGaAs line camera (Symphony II). Single spectra were obtained upon excitation with an excitation power of 0.667 mW cm$^{-2}$ at 570 nm (corresponding to the $E_{22}$ transition of (6,5) SWNTs). All spectra were recorded at ambient temperature and with an 850 or 780 nm long-pass filter.

Photoluminescence quantum yield and photoluminescence spectroscopy

For determining photoluminescence quantum yield (PLQY) values, a home-built setup was used. Briefly, functionalized (6,5) SWNTs were excited at 570 nm with the wavelength-filtered output of a pico-second pulsed supercontinuum laser (NKT Photonics SuperK Extreme). Residual laser light was blocked by a long-pass filter (cut-on 950 nm). PL spectra were recorded with an Acton SpectraPro SP2358 spectrograph (grating blaze 1200 nm, 150 lines mm$^{-1}$) equipped with a liquid-nitrogen-cooled InGaAs line camera (Princeton Instruments, OMA-V:1024).

Absolute PLQYs ($\eta$) of unfunctionalized and functionalized dispersions were determined from integrating sphere measurements, which give direct access to the ratio of emitted ($N_{em}$) and absorbed photons ($N_{abs}$):

$$\eta = \frac{N_{em}}{N_{abs}} \qquad (1)$$

For this, the SWNT dispersions were adjusted to an optical density of <0.2 cm$^{-1}$ at the $E_{11}$ transition and a quartz glass cuvette filled with 1 mL of diluted SWNT dispersion was placed in the center of an integrating sphere (LabSphere, Spectralon coating). After excitation at the respective $E_{22}$ transition the light exiting the integrating sphere (attenuated laser light and photoluminescence) was guided to the spectrometer via an optical fiber. The same measurement was repeated with the pure solvent (e.g. 1% (w/v) DOC) to account for light absorption/scattering by the solvent. A value proportional to the number of emitted photons was determined by integration of the sample emission spectrum and the number of absorbed photons was calculated from the difference of the integrated laser signals of the reference (pure solvent) and measurement sample (SWNT dispersion). The wavelength-dependent detection efficiency and other optical losses were accounted for by collection of calibration spectra using a stabilized tungsten halogen light source with known spectral power distribution (Thorlabs SLS201/M,300-2600 nm).

Resonant Raman spectroscopy

Resonant Raman spectroscopy was performed with a Renishaw inVia Reflex confocal Raman microscope, equipped with a 50× long-working distance objective (Olympus, N.A. 0.5). The SWNT dispersion was drop-cast onto glass slides and subsequently rinsed with water to remove any excess surfactants. Raman spectra were acquired under 532nm laser excitation.

**Introduction of luminescent defects (Example 1)**

For the introduction of luminescent defects, the optical density of an aqueous SWNT dispersion was adjusted to 0.33 cm$^{-1}$ at the $E_{11}$ transition for (6,5) SWNTs (corresponding to a concentration of 0.62 mg L$^{-1}$) with ultra-pure water or 0.33% (w/v) SDS. For functionalization of unsorted SWNTs, CoMoCAT raw material dispersed in 1% (w/v) DOC was transferred to 0.33% (w/v) SDS prior to functionalization and adjusted to 0.33 cm$^{-1}$ at $E_{11}$ transition of (6,5) SWNTs (corresponding to a concentration of 0.62 mg L$^{-1}$).

Fresh stock solutions of $CuSO_4(H_2O)_5$ (Sigma-Aldrich, ≥99.9% trace-metal basis) and sodium-L-ascorbate (Sigma-Aldrich, ≥99%) were prepared with a typical concentration of 6.25 mg mL$^{-1}$ and 40 mg mL$^{-1}$, respectively. Aliquots of $CuSO_4(H_2O)_5$ and sodium ascorbate stock solutions were added to the reaction mixture until the desired concentrations were reached and the reaction mixture was stored in the dark for 16 h. To stop the reaction, aliquots of a 1.4 M $Na_4$EDTA (Sigma-Aldrich, 98%) solution and 10% (w/v) DOC solution were added to the reaction mixture. To achieve reorganization of oxygen defects and for removal of quenching effects the functionalized SWNT dispersions may be irradiated with UV-light (365 nm, SOLIS-365C, Thorlabs, 1.9 mW mm$^{-2}$) for 2 h or placed in daylight for >4 days. Finally, the reaction mixture was filtered via spin-filtration (Amicon Ultra-4, 100 kDa) and functionalized (6,5) SWNTs were resuspended in 1 % (w/v) DOC.

**Analysis of the luminescent properties of SWNTs having luminescent oxygen defects obtained in Example 1**

The progress of functionalization of SDS-coated (6,5) SWNTs in dispersion upon addition of

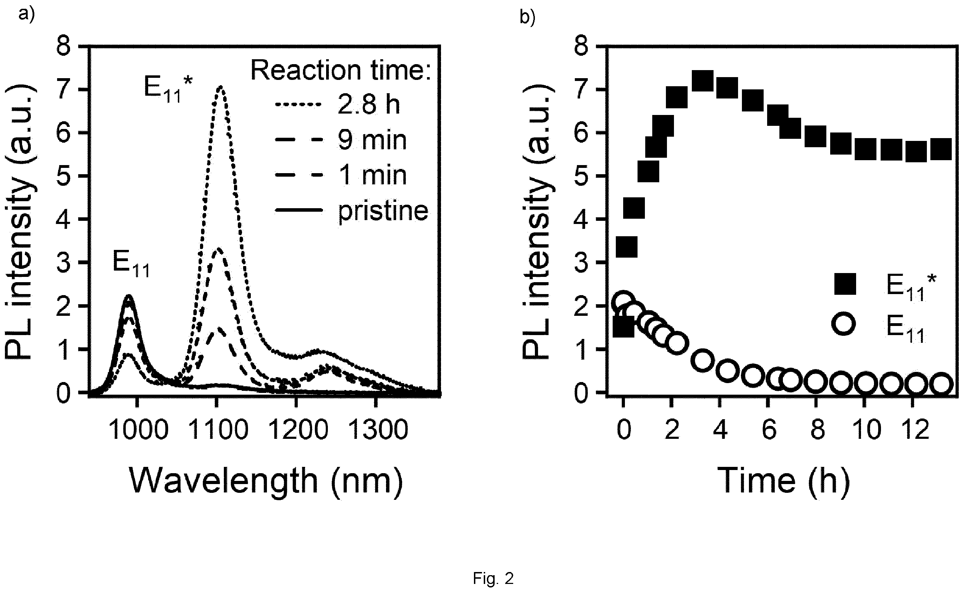

$CuSO_4$ (250 $\mu$M) and NaAsc (3 mM) can be monitored directly by the evolution of the PL spectra (excitation at 570 nm, $E_{22}$) and the appearance of a bright red-shifted emission feature ($E_{11}^*$) around -1100 nm (see Figure 2a)). The $E_{11}^*$ emission feature is 115 nm ($\Delta E$ = 131 meV) red-shifted from the initial $E_{11}$ emission. Its intensity increases strongly within a couple of minutes while the $E_{11}$ emission simultaneously decreases. The maximum PL intensity of the dispersion is reached after 2.8 hours of reaction time with a 3.2 times higher PL intensity than the original $E_{11}$ emission (see Figure 2b).

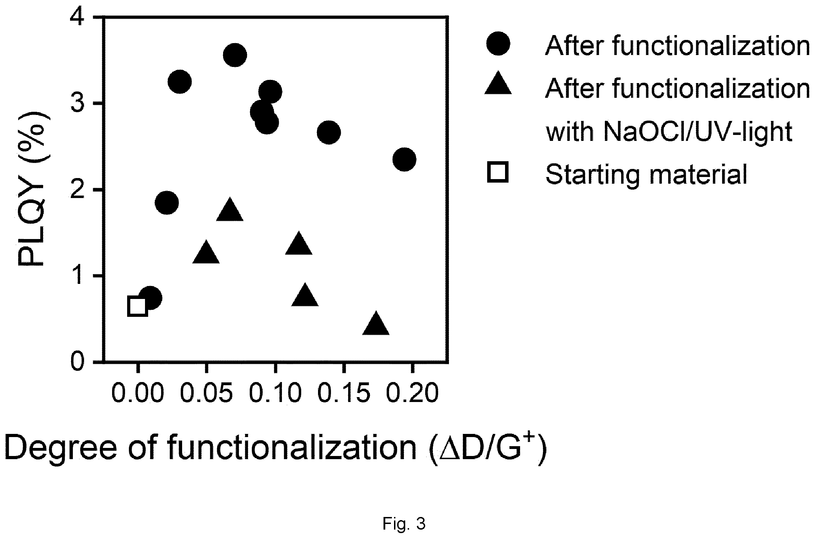

The photoluminescence quantum yield of the SWNTs was recorded as a function of the degree of functionalization (D/G$^+$). Upon functionalization of unfunctionalized (6,5) SWNTs (average PLQY -0.64%) a strong brightening effect with a PLQY of up to 3.6% at optimal degree of functionalization has been observed (cf. Figure 3). The optimal degree of functionalization has been estimated as 0.075 (D/G$^+$).

## Comparative Example 1

Functionalized SWNTs were obtained by the method described in US 2020/0180962 A1 by addition of NaClO and strong UV-B irradiation.

For this, the optical density of an aqueous SWNT dispersion was adjusted to 0.1 cm$^{-1}$ at the $E_{11}$ transition for (6,5) SWNTs (corresponding to a concentration of 0.19 mg L$^{-1}$) with ultra-pure water or 0.1% (w/v) SDS. Aliquots of NaOCl (15.15 mM, 10-15% available chloride, Carl Roth) in ultra-pure water were added to 3 mL of a diluted SWNT dispersion. The degree of functionalization was controlled by the concentration of NaOCl in the reaction mixture and ranged between 0.025 mM and 1.5 mM. The reaction mixture was irradiated with UV-C-light (254 nm, VL-215.LC, Vilber Lourmat, 15W) for 45 min. The reaction was stopped *via* surfactant exchange by addition of 20 $\mu$L of 10% (w/v) DOC.

As can be seen from the comparison displayed in Figure 3, functionalized SWNTs obtained by the method of Example 1 show a PLQY of about 3.6% for a degree of functionalization of 0.075 (D/G$^+$). In contrast, functionalized SWNTs obtained by the method of Comparative Example 1 show a PLQY of about 1.8% for a degree of functionalization of 0.075 (D/G$^+$).

## Preparation of hybrid structures

Hybrid structures comprising a single-walled carbon nanotube having luminescent oxygen defects and a nucleic acid molecule or a pegylated phospholipid adhered to the surface of the single-walled carbon nanotube were prepared.

For this purpose, surfactant transfer to PL-PEG$_{5000}$ and ssDNA-(GT)$_{10}$ in PBS buffer was performed via dialysis for 7 and 4 days, respectively. In both cases the successful transfer was confirmed by a red-shift of the $E_{11}$ PL peak position. The emission properties of the functionalized (6,5) SWNTs remained largely unchanged by the transfer and still showed high PLQYs of 2.9% and 2.4%, respectively.

## Hybrid structures for sensing applications

To investigate the suitability of the SWNTs having luminescent oxygen defects for sensing applications, SWNTs wrapped with ssDNA-(GT)$_{10}$ were used as a model system. When exposed to catecholamines such as dopamine, the ssDNA-(GT)$_{10}$-coated and oxygen-functionalized (6,5) SWNTs showed a strong increase in $E_{11}^*$ emission intensity (addition of 200 $\mu$M of dopamine to the dispersion).

Thus, the hybrid structures according to the present invention could be used for in-situ monitoring of dopamine release and are promising for other detection schemes that rely on the interaction of small biomolecules with ssDNA-coated SWNTs.

## Claims

1. A method for preparing single walled carbon nanotubes having luminescent oxygen defects, the method comprising the steps of:

   a) providing a reaction mixture comprising single-walled carbon nanotubes, n-valent metal cations M$^{n+}$ and a reducing agent in a solvent, wherein

   n is 2 or 3,
   the reducing agent is capable of reducing the n-valent metal cation to a (n-1)-valent metal cation M$^{(n-1)+}$,
   the (n-1)-valent metal cation M$^{(n-1)+}$ is capable of performing one-electron reduction of molecular oxygen $O_2$,
   the solvent comprises molecular oxygen dissolved in the solvent, and
   the molar amount of the reducing agent contained in the reaction mixture is at least three times the molar amount of the n-valent metal cation M$^{n+}$. and

   b) allowing the reaction mixture to react.

2. The method according to claim 1, wherein the n-valent metal cation M$^{n+}$ is selected from the group consisting of Cu$^{2+}$, Co$^{2+}$, Cr$^{3+}$ and Ti$^{3+}$.

3. The method according to claim 1 or 2, wherein the reducing agent is selected from the group consisting of hydrazine derivatives, hydroxylamine, formaldehyde, sodium bisulfite, sodium-L-ascorbate and sodium dithionite.

4. The method according to any one of claims 1 to 3, wherein the carbon nanotubes are one or more type selected from (6,5) nanotubes, (7,5) nanotubes, (8,3) nanotubes, (6,4) nanotubes, and mixtures thereof.

5. The method according to any one of claims 1 to 4, further comprising the step of:
   c) terminating the reaction of the reaction mixture.

6. The method according to claim 5, wherein the reaction is terminated by

   (i) addition of a complexing agent being capable of complexing the metal cation $M^{n+}$ and/or $M^{(n-1)+}$; or
   (ii) addition of a surface agent being capable of blocking the surface of the single-walled carbon from further reaction; or
   (iii) addition of both the complexing agent and the surface agent.

7. A composition comprising a plurality of single walled carbon nanotubes having luminescent oxygen defects, wherein the single walled carbon nanotubes having luminescent oxygen defects have a photoluminescence quantum yield of at least 2%, wherein the photoluminescence quantum yield is determined as explained in the description.

8. The composition according to claim 7, wherein the single walled carbon nanotubes having luminescent oxygen defects show $E_{11}$ emission, $E_{11}^*$ emission and optionally $E_{11}^{*-}$ emission.

9. The composition according to claim 7 or 8, wherein the peak area ratio of the $E_{11}^*$ absorption to the $E_{11}$ absorption ($E_{11}^*/E_{11}$) is at least 0.05, wherein the peak area ratio $E_{11}^*/E_{11}$ is determined by UV-VIS-NIR absorption spectroscopy.

10. The composition according to any one of claims 7 to 9, wherein the degree of functionalization ($D/G^+$) of the single walled carbon nanotubes having luminescent oxygen defects is at least 0.05, wherein the ratio ($D/G^+$) is determined as area ratio of the D and $G^+$ signals observed in resonant Raman spectroscopy.

11. The composition according to any one of claims 7 to 10, wherein the single walled carbon nanotubes having luminescent oxygen defects have emission maxima at about 975 nm and at about 1100 nm and optionally at about 1275 nm.

12. A hybrid structure comprising a single-walled carbon nanotube having luminescent oxygen defects and a nucleic acid molecule adhered to the surface of the single-walled carbon nanotube.

13. A hybrid structure comprising a single-walled carbon nanotube having luminescent oxygen defects and a pegylated phospholipid adhered to the surface of the single-walled carbon nanotube.

14. Use of the hybrid structure according to claim 12 or 13 in biological imaging or sensing applications.

15. Use according to claim 14, wherein the biological imaging is *in-vivo* imaging.

ROS production through Fenton-like reaction cycle

Fig. 1

Fig. 2

Fig. 3

Europäisches
Patentamt

European
Patent Office

Office européen
des brevets

# EUROPEAN SEARCH REPORT

**Application Number**

EP 24 15 8317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONJA WIELAND ET AL: "Photo-Activated, Solid-State Introduction of Luminescent Oxygen Defects into Semiconducting Single-Walled Carbon Nanotubes", ARXIV.ORG, CORNELL UNIVERSITY LIBRARY, 201 OLIN LIBRARY CORNELL UNIVERSITY ITHACA, NY 14853, 8 February 2024 (2024-02-08), XP091683041, DOI: 10.1021/ACS.JPCC.3C07000 | 7-11 | INV. C01B32/168 C01B32/174 |
| A | * the whole document * | 1-6 | |
| | ----- | | |
| X | YOKO IIZUMI ET AL: "Oxygen-doped carbon nanotubes for near-infrared fluorescent labels and imaging probes", SCIENTIFIC REPORTS, vol. 8, no. 1, 19 April 2018 (2018-04-19), XP055680190, DOI: 10.1038/s41598-018-24399-8 | 12-15 | |
| A | * the whole document * | 1-6 | |
| | ----- | | |
| A | XUEDAN MA ET AL: "Electronic Structure and Chemical Nature of Oxygen Dopant States in Carbon Nanotubes", ACS NANO, vol. 8, no. 10, 28 October 2014 (2014-10-28), pages 10782-10789, XP055680208, US ISSN: 1936-0851, DOI: 10.1021/nn504553y * page 10787 * | 1-15 | **TECHNICAL FIELDS SEARCHED (IPC)** C01B |
| | ----- | | |
| | -/-- | | |

The present search report has been drawn up for all claims

| Place of search | Date of completion of the search | Examiner |
|---|---|---|
| Munich | 26 August 2024 | Lecerf, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**Application Number**

EP 24 15 8317

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MCCAMEY D. R. ET AL: "Electronic Spin Storage in an Electrically Readable Nuclear Spin Memory with a Lifetime >100 Seconds", SCIENCE, vol. 330, no. 6011, 17 December 2010 (2010-12-17), pages 1652-1656, XP093193841, US ISSN: 0036-8075, DOI: 10.1126/science.1197931 * the whole document * | 1-15 | |

-----

TECHNICAL FIELDS
SEARCHED      (IPC)

The present search report has been drawn up for all claims

| Place of search | Date of completion of the search | Examiner |
|---|---|---|
| Munich | 26 August 2024 | Lecerf, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200180962 A1